# EUROPÄISCHE PATENTSCHRIFT

(11) **EP 0 806 387 B1**
(45) Veröffentlichungstag und Bekanntmachung des Hinweises auf die Patenterteilung: **08.11.2000**
(21) Anmeldenummer: 97106688.1
(22) Anmeldetag: 23.04.1997
(51) Int. Cl.: B65G 53/46, B65G 53/32

(54) **Einrichtung zum Auftragen einer Mörtelschicht**
Apparatus for applying a mortar layer
Dispositif pour appliquer une couche de mortier

(30) Priorität: 06.05.1996 AT 80296
(43) Veröffentlichungstag der Anmeldung: 12.11.1997
(73) Patentinhaber: Wilhelm Müller Maschinenfabrik GmbH & Co. KG, 59348 Lüdinghausen (DE)
(72) Erfinder: Ganahl, Hans, 6780 Silbertal (AT)
(74) Vertreter: Hefel, Herbert, Dipl.-Ing.

(56) Entgegenhaltungen:
- EP-A- 0 212 256
- EP-A- 0 372 611
- CH-A- 677 776
- DE-A- 2 054 792
- DE-A- 3 330 892
- GB-A- 2 149 741
- US-A- 2 949 275

## Beschreibung

Die Erfindung bezieht sich auf eine Einrichtung zum Fördern von Mörtel zum Auftragen einer Mörtelschichte, insbesondere einer Betonschichte auf eine Streckenwandung, eine Schalung od. dgl.

Einrichtungen dieser Art sind bekannt (vgl DE3330892A). Die Dosiereinrichtung besteht aus einem zylindrischen Rotor mit erheblicher Achslänge und mit einer vertikalen Drehachse. Im Umfangsbereich des zylindrischen Rotors sind in gleichen Bogenabständen achsparallel zur Drehachse den Rotor zur Gänze durchsetzende Bohrungen mit einem Fassungsvermögen von ca. 1,5 bis 2 l. Dieser Rotor ist von einem Gehäuse aufgenommen, wobei an der Unterseite des Rotors und auch an seiner Oberseite jeweils eine Gummiplatte unter hohem Druck anliegt. Dieses Gehäuse besitzt eine obere Einlaßöffnung, die mit einem Vorratsbehälter für den Trockenmörtel verbunden ist, und eine untere Auslaßöffnung, an der ein Förderschlauch mit der Ausspritzdüse anschließbar ist, wobei diese untere Auslaßöffnung gegenüber der Einlaßöffnung winkelmäßig versetzt ist. Achsgleich mit dieser unteren Auslaßöffnung im Gehäuse ist an der Oberseite ein Druckluftanschluß vorgesehen. Der Bogenwinkel, um den die obere Einlaßöffnung und die untere Auslaßöffnung am Gehäuse vorgesehen sind, beträgt in der Regel 180°. In Umdrehungsrichtung des Rotors gesehen folgt auf die untere Auslaßöffnung eine Entlüftungsöffnung. Dieser Rotor ist nach Art eines Trommelmagazins ausgebildet. Beim betriebsmäßigen Einsatz dreht sich dieser Rotor unter der Einlaßöffnung durch, wobei jedesmal eine vorbeistreichende Bohrung des Rotors mit Trockenmörtel gefüllt wird. Hat diese mit Trockenmörtel gefüllte Bohrung die untere Auslaßöffnung erreicht, so wird die von der Bohrung aufgenommene Materialmenge mittels Druckluft in den angeschlossenen Schlauch ausgeblasen. Bei ihrem weiteren Umlauf passiert die nun entleerte Bohrung vorerst eine Entlüftungsöffnung, aus der der überschüssige Luftdruck entweichen kann, bevor sie wieder zur Einlaßöffnung des Gehäuses gelangt. Diese vorbekannte Einrichtung ist nicht zweckmäßig. Das zu verarbeitende Material wird pulsierend zur Ausspritzdüse gefördert, bei welcher kontinuierlich Wasser zugeleitet wird, so daß das die Ausspritzdüse verlassende Material nicht gleichmäßig durchnetzt ist. Die am Rotor oben und unten unter Druck anliegenden Gummischeiben sind einem hohen Verschleiß unterworfen und müssen häufig ausgetauscht werden. Darüberhinaus ist das Entlüften der einzelnen entleerten Bohrungen mit einer erheblichen Staubentwicklung verbunden. ("Spritzbeton" - G. Ruffert - Beton Verlag 1991 / Seite 31).

In diesem Zusammenhang ist auch die DE-OS 20 54 792 zu erwähnen, die eine Vorrichtung zum kontinuierlichen Austragen von pulverförmigen Materialien zeigt und beschreibt. Diese Vorrichtung besteht aus einem zylindrischen Vorratsbehälter mit vertikaler Achse, in dessen unterem Boden durch Druck einstellbare Öffnungen vorgesehen sind. Unmittelbar oberhalb dieses Bodens ist ein Rührblatt drehbar gelagert. Unterhalb dieses Bodens ist ein weiterer zylindrischer Behälter mit einem Rührwerk und einer Drehscheibe angebracht. Die Drehscheibe besitzt einen auskragenden Flansch. Ein Abstreifer ragt in den Kanal, der vom erwähnten auskragenden Flansch und der Seitenwand des unteren zylindrischen Behälters gebildet wird, und dieser Abstreifer reicht in ein vertikales Abfallrohr. Rührblatt, Rührwerk und Drehscheibe sitzen auf einer gemeinsamen vertikalen, antreibbaren Welle. Für pulverförmige Materialien mag sich diese Einrichtung evtl. eignen. Zur Förderung von Baustoffen für Spritzbetonmörtel ist eine solche Einrichtung allerdings völlig ungeeignet. Das gesamte Gewicht des unter Druck stehenden, trockenen Mörtels läge auf dem Rührblatt auf, so daß dieses Rührblatt wohl nicht mehr bewegbar wäre. Darüberhinaus enthält der Baustoff für Spritzbetonmörtel auch Steine verschiedener Größe, die sehr rasch die hier rotierenden Werkzeuge beschädigen würden, da solchen Steinen jegliche Ausweichmöglichkeit aufgrund der rotierenden Flügel, der Kratzer und der feststehenden Kanten fehlt. Vorrichtungen dieser Art sind daher nur für pulverförmige Materialien einsetzbar, worauf ja auch in dieser Druckschrift mehrfach und ausdrücklich hingewiesen wird.

Hingegen zeigt und beschreibt die US-PS 2 949 275 eine Vorrichtung für Betonspritzverfahren. Eine Einrichtung dieser Art ist auch in "Spritzbeton" Günter Ruffert - Beton-Verlag - 1991, Seite 28 bis Seite 32 gezeigt und beschrieben. Diese Einrichtung oder Maschine besteht aus zwei übereinander angeordneten Kammern - einer Arbeitskammer, aus der das Material mit Hilfe eines Taschenrades abgezogen und verblasen wird, sowie einer über der Arbeitskammer angeordneten Vorratskammer, die laufend mit frischem Material beschickt wird. Da zur Förderung des Spritzmaterials aus der Arbeitskammer in den Spritzschlauch die Kammer unter Überdruck stehen muß, sind beide Kammern durch ein Ventil voneinander getrennt. Ist die untere Kammer leergefahren, wird zunächst über der oberen Kammer die Einfüllöffnung geschlossen, dann auch diese Kammer unter Überdruck gesetzt, das Ventil zwischen den beiden Kammern geöffnet und die untere Kammer durch das von oben nachrutschende Material gefüllt. Nach Schließen des Trennventiles kann jetzt die obere Kammer wieder geöffnet und neu beschickt werden. Durch diese Einrichtung ist es möglich, einen halbwegs kontinuierlichen Arbeitsablauf sicherzustellen. Solche Maschinen oder Einrichtungen, Zweikammermaschine benannt, wurden früher verwendet.

Ausgehend von diesem Stand der Technik zielt die Erfindung nun darauf ab, hier eine Einrichtung vorzuschlagen, die ohne Staubentwicklung betrieben werden kann, bei der das zu verarbeitende Material gleichmäßig zur Ausspritzdüse gefördert wird und welche einem geringen Verschleiß unterworfen ist und darüberhinaus erdfeuchter Mörtel verarbeitet werden kann. Diese komplexe Aufgabe löst die Erfindung durch jene Merkmale, die Inhalt und Gegenstand des kennzeichnenden Teiles des Patentanspruches 1 sind.

Um die Erfindung zu veranschaulichen, werden zwei Ausführungsbeispiele anhand der Zeichnung näher erläutert, ohne dadurch die Erfindung auf diese gezeigten Ausführungsbeispiele einzuschränken. Es zeigen:
- Fig. 1: einen Längsschnitt und
- Fig. 2: einen Querschnitt nach der Linie II-II in Fig. 1 eines ersten Ausführungs beispieles;
- Fig. 3: einen Längsschnitt nach der Linie III-III in Fig. 4 und
- Fig. 4: einen Querschnitt nach der Linie IV-IV in Fig. 3 einer zweiten Ausfüh rungsform.
Zur Bezeichnung gleicher bzw. funktionsgleicher Teile sind bei beiden Ausführungsbeispielen dieselben Hinweisziffern verwendet worden.

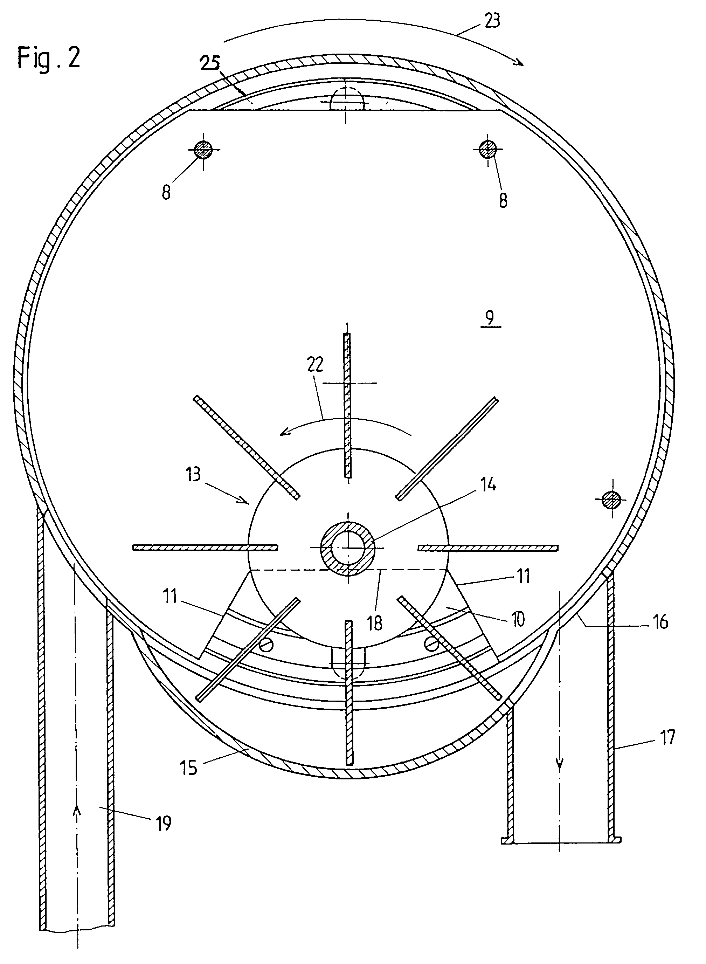

Ein hier nicht näher dargestellter, liegender und um seine horizontale Achse 1 drehbar gelagerter, zylindrischer Behälter 2 mit an seiner Innenwand festgelegten Förderschneckenbändern trägt an seiner einen, offenen Stirnseite eine mit ihm fest verbundene Trommel 3, deren Innendurchmesser ein Mehrfaches ihrer axialen Länge beträgt. Diese Trommel 3 ist zusammen mit dem stirnseitigen Ende des Behälters 2 in einem am Gehäuse 4 festgelegten Lagerdrehkranz 5 gelagert. Von der vom Behälter 2 abgewandten Stirnseite 6 der Trommel 3 distanziert liegt die Stirnwand 7 des Gehäuses 4, wobei an der Innenseite dieser Stirnwand 7 sich horizontal erstreckende Bolzen 8 angeordnet sind, die an ihrem freien Ende eine hier lösbar befestigte, der Stirnseite 6 der Trommel 3 unmittelbar benachbart liegende Blende 9 tragen. An der Unterseite der Blende 9 ist eine Durchtrittsöffnung 10 ausgespart, die hier beim gezeigten Ausführungsbeispiel vom unteren Rand der Blende ausgeht, trapezförmig gestaltet ist mit nach oben konvergierenden Seitenrändern 11 (Fig. 2).

In dem von der Blende 9 und der Stirnwand 7 begrenzten Zwischenraum 12 liegt ein Schaufelrad 13, dessen Drehachse 14 parallel zur Achse 1 der Trommel 3 liegt, beide Achsen befinden sich in einer gemeinsamen Vertikalebene. Der Durchmesser und damit der Hüllkreis des Schaufelrades 13 ist größer als der Abstand der Drehachse 14 des Schaufelrades 13 von der unteren Kante der Trommel 3, so daß die untere Seite des Hüllkreises des Schaufelrades 13 unterhalb der Unterkante der Trommel 3 liegt. Unterhalb der Durchtrittsöffnung 10 und seitlich derselben ist eine bogenförmig verlaufende, korrespondierend zum Hüllkreis des Schaufelrades 13 ausgebildete Streichleiste 15 vorgesehen, die sich über einen Bogen von hier ca. 130 ° erstreckt. Durch die seitlichen Begrenzungswände des Gehäuses 4 ist diese bogenförmig verlaufende Streichleiste 15 als Wanne ausgebildet. An dieser bogenförmigen Streichleiste 15 streichen die Schaufeln des Schaufelrades 13 entlang. Im einen Endbereich dieser bogenförmig verlaufenden Streichleiste 15 ist eine Auslaßmündung 16 mit einem Rohrstutzen 17 vorgesehen, an den ein Schlauch anschließbar ist, über den der Mörtel ausgetragen wird. Die Oberkante 18 der Durchtrittsöffnung 10 liegt unterhalb der Drehachse 14 des Schaufelrades 13, und die am äußeren Randbereich gemessene Breite der Durchtrittsöffnung 10 ist etwas kleiner als die Sehnenlänge der bogenförmig verlaufenden Streichleiste 15 (Fig. 2). Der Behälter 2 und das Gehäuse 4 umschließen einen luftdichten Raum, in den eine Druckluftleitung 19 mündet. Diese Druckluftleitung 19 mündet in den Zwischenraum 12 des Gehäuses 4, in dem das Schaufelrad 13 liegt. An der Eintrittsmündung der Druckluftleitung 19 ist eine Rückschlagklappe vorgesehen, die hier in der Darstellung nach Fig. 2 durch die Blende 9 verdeckt ist.

Die Durchtrittsöffnung 10 in der Blende 9 kann so ausgebildet sein, daß ihr Querschnitt veränderbar ist. Diese Durchtrittsöffnung 10 liegt symmetrisch zu einer durch die Drehachse 14 des Schaufelrades 13 legbaren Vertikalebene. Die Blende 9 ist in ihrem oberen Bereich ausgeschnitten bzw. abgeschnitten und begrenzt mit dem Gehäuse 4 eine Durchtrittsöffnung 25 für die Druckluft. Die Schaufeln des Schaufelrades 13 bestehen aus elastisch verformbaren Platten, die zweckmäßigerweise austauschbar angeordnet sind.

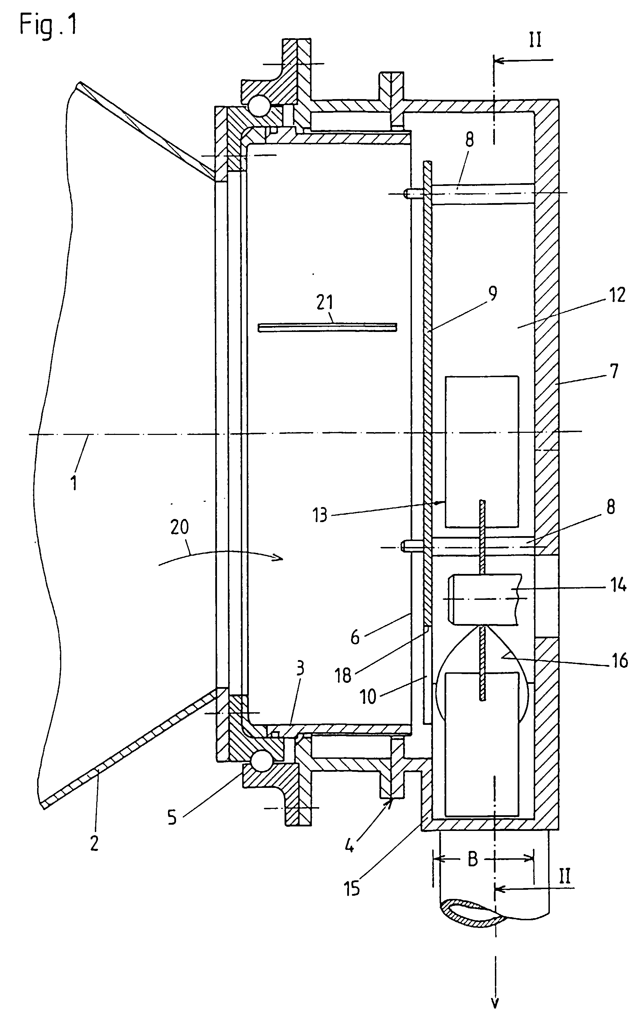

Der zu verarbeitende, insbesondere zu verspritzende Mörtel wird in den Behälter 2 eingefüllt. Dieser Mörtel kann erdfeucht sein. Dann wird der Behälter 2 verschlossen und angetrieben, so daß er sich um seine Achse 1 dreht und dabei den in ihm befindlichen Mörtel in die sich ebenfalls mitdrehende Trommel 3 fördert (Pfeil 20). An der Innenwand dieser Trommel 3 können, in Umfangsrichtung verteilt, mehrere Leisten 21 befestigt sein, von denen in Fig. 1 nur eine dargestellt ist. Der in der Trommel 3 befindliche bzw. in diese gelangende Mörtel wird durch die Drehbewegung dieser Trommel 3 ständig in Bewegung gehalten und fließt durch die Durchtrittsöffnung 10 der Blende 9 auf die Streichleiste 15, von wo er durch die Schaufeln des Schaufelrades 13, das sich im Gegenuhrzeigersinn (Pfeil 22) dreht, zur Auslaßmündung 16 transportiert wird. Über die Druckluftleitung 19 wird innerhalb der Einrichtung ein hinreichend großer Luftdruck aufgebaut. Der in die Auslaßmündung 16 fallende Mörtel wird über die unter Druck stehende Luft durch den nicht dargestellten Schlauch transportiert und an dessen Ende über eine Auslaßdüse ausgespritzt, dies unter Zusatz von Wasser. Die Trommel 3 dreht sich, ebenso wie der Behälter 2, im Uhrzeigersinn (Pfeil 23).

Das gezeigte Ausführungsbeispiel zeigt ein Schaufelrad 13 mit geraden Schaufeln, also Schaufeln, deren Ebenen die Drehachse beinhalten oder zumindest zu dieser parallel liegen. Es wäre möglich, das Schaufelrad so zu gestalten, daß die Schaufeln zur Drehachse schräg stehen, ähnlich wie ein Axialgebläse, so daß die sich drehenden Schaufeln das von ihnen erfaßte Material in Richtung der Drehachse fördern, rechtwinkelig zur Zeichenebene in Fig. 2. In diesem Falle wird das Gehäuse 4 so ausgebildet, daß der Zwischenraum 12 erheblich breiter ist als das Schaufelrad, und die Auslaßmündung 16 für den Mörtel ist dann im unteren Bereich der Streichleiste 15 vorgesehen und auf der Seite des Schaufelrades, die der Blende 9 abgewandt ist.

Die Drehachse 14 des Schaufelrades 13 wird von einem hier nicht dargestellten, drehzahlregelbaren Motor angetrieben, der an der Außenseite der Stirnwand 7 angeflanscht ist.

Im gezeigten Ausführungsbeispiel ist der Hüllkreis bzw. der Durchmesser des Schaufelrades 13 kleiner als jener der Trommel 3. Es wäre durchaus denkbar und möglich, das Schaufelrad so groß zu wählen, daß sein Hüllkreis bzw. sein Durchmesser gleich groß wie der Durchmesser der Trommel oder gar größer als dieser ist. Die Streichleiste 15 am Gehäuse 4, die korrespondierend zum Hüllkreis des Schaufelrades 13 verläuft, kann so angeordnet sein, daß ihr unterer Teil etwas unterhalb der Durchtrittsöffnung 10 der Blende 9 liegt, so daß der zu verarbeitende Mörtel im Bereich der Durchtrittsöffnung 10 eine, wenn auch kurze Fallstrecke vorfindet, über welche er in den Eingriffsbereich des Schaufelrades 13 gelangt.

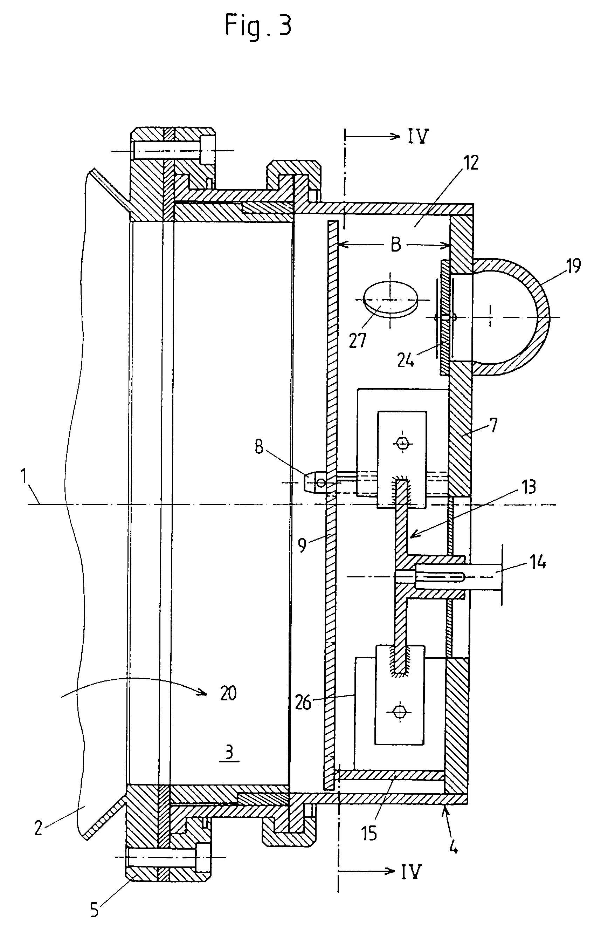

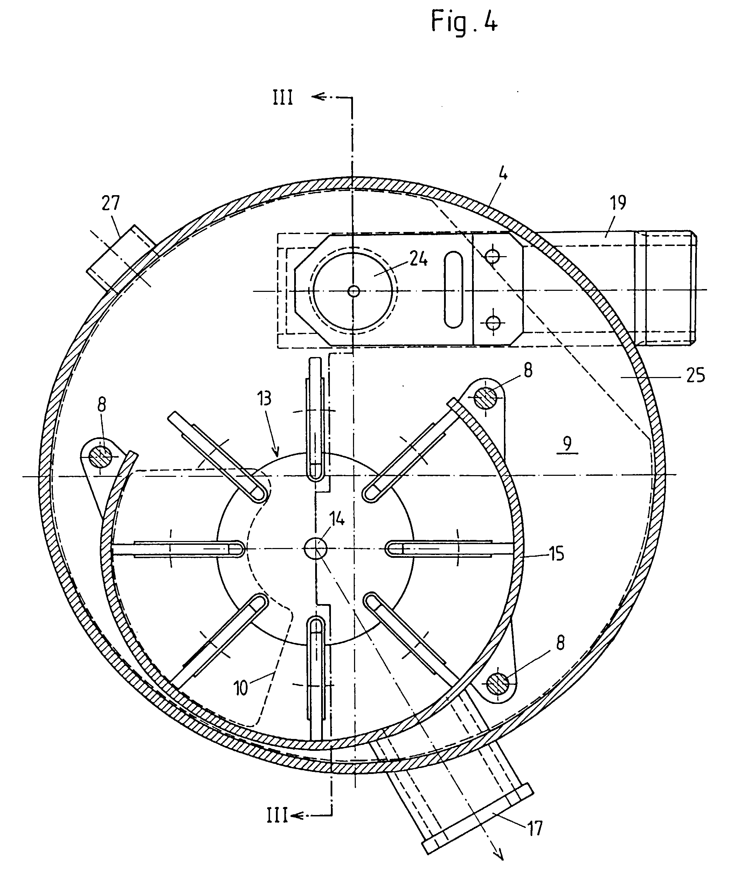

Das Ausführungsbeispiel nach den Fig. 3 und 4 unterscheidet sich vom erstbesprochenen im wesentlichen dadurch, daß die Streichleiste 15 hier innerhalb eines die Trommel 3 achsial fortsetzenden, gedachten Zylinders liegt (Fig. 4). An horizontalen Bolzen 8, die an der Innenseite der Stirnwand 7 des Gehäuses 4 festgelegt sind, ist hier die Streichleiste 15 lösbar befestigt. Die Blende 9 ist in Fig. 4 durch eine strichlierte Linie angedeutet, da sie in dieser Figur vor der Schnittebene (IV-IV) liegt, ebenso die Durchtrittsöffnung 10. Es ist hier aus dieser Darstellung auch ersichtlich, daß eine Randkante der in der Blende 9 vorgesehenen Durchtrittsöffnung 10 etwa korrespondierend und annähernd deckungsgleich mit einem Bogenabschnitt der Streichleiste 15 verläuft. Die Schaufeln des Schaufelrades 13 sind schmäler als die Breite B des Zwischenraumes 12 und darüberhinaus gegen die Stirnwand 7 hin versetzt, so daß die der Blende 9 zugewandten Randkanten 26 dieser Schaufeln von der Blende 9 distanziert sind. Eine im oberen Teil des Gehäuses 4 vorgesehene und luftdicht verschließbare Öffnung 27 dient dazu, die Arbeit des Schaufelrades 13 im Bedarfsfalle zu beobachten und über diese Öffnung 27 manipulierend einzugreifen.

Mit der vorstehend beschriebenen Einrichtung kann ofentrockener, aber auch erdfeuchter Mörtel staubfrei und verschleißarm verarbeitet werden, was bislang nicht möglich war. Die Verarbeitung von erdfeuchtem Mörtel ist vorteilhaft, da sie weniger kostenaufwendig ist als die Verarbeitung von ofentrockenem Mörtel.

### Legende zu den Hinweisziffern:

- 1: Achse
- 2: Behälter
- 3: Trommel
- 4: Gehäuse
- 5: Lagerdrehkranz
- 6: Stirnseite
- 7: Stirnwand
- 8: Bolzen
- 9: Blende
- 10: Durchtrittsöffnung
- 11: Seitenrand
- 12: Zwischenraum
- 13: Schaufelrad
- 14: Drehachse
- 15: Streichleiste (Wanne)
- 16: Auslaßmündung
- 17: Rohrstutzen
- 18: Oberkante
- 19: Druckluftleitung
- 20: Pfeil
- 21: Leiste
- 22: Pfeil
- 23: Pfeil
- 24: Rückschlagklappe
- 25: Durchtrittsöffnung
- 26: Kante
- 27: Öffnung

## Patentansprüche

1. Einrichtung zum Fördern von Mörtel zum Auftragen einer Mörtelschichte, insbesondere einer Betonschichte auf eine Streckenwandung, eine Schalung od. dgl., gekennzeichnet durch eine um eine horizontale Achse drehbare, mit ihrer einen Seite an einen Behälter (2) zur Aufnahme des zu verarbeitenden Mörtels anschließbare Trommel (3) und der anderen Seite der Trommel (3) eine gegenüber dieser ortsfeste Blende (9) mit einer dem unteren Abschnitt der drehbar gelagerten Trommel (3) benachbart liegenden Durchtrittsöffnung (10) zugeordnet ist, und - in Fließrichtung des Mörtels gesehen - hinter der Blende (9) ein Schaufelrad (13) angeordnet ist, dessen Drehachse (14) parallel zur Drehachse (1) der Trommel (3) liegt, und seitlich und unterhalb der Durchtrittsöffnung (10) eine bogenförmig verlaufende, korrespondierend zum Hüllkreis des Schaufelrades (13) ausgebildete, sich über einen Bogenwinkel von ca. 120 - 270 ° erstreckende Streichleiste (15) anschließt mit einer zu einem Förderschlauch führenden Auslaßmündung (16), wobei die Breite der Durchtrittsöffnung (10) höchstens der Sehnenlänge der bogenförmig verlaufenden Streichleiste (15) entspricht, vorzugsweise kleiner als diese ist, und Trommel (3) und Schaufelrad (13) in einem im wesentlichen luftdichten Gehäuse (4) angeordnet sind, in das eine Druckluftleitung (19) mündet.

2. Einrichtung nach Anspruch 1, dadurch gekennzeichnet, daß die Auslaßmündung (16) im Endbereich der bogenförmig verlaufenden Streichleiste (15) liegt und die in Achsrichtung des Schaufelrades gemessene Breite der Streichleiste (15) so groß ist wie die Breite der Schaufeln des Schaufelrades (13).

3. Einrichtung nach Anspruch 1, dadurch gekennzeichnet, daß das Schaufelrad (13) zu seiner Drehachse schrägstehende Schaufeln aufweist, daß die Breite der Streichleiste (15) größer ist als die Breite der schrägstehenden Schaufeln und das Schaufelrad benachbart der Blende (9) liegt und die Auslaßmündung (16) auf der Seite des Schaufelrades (13) liegt, die der Blende (9) abgewandt ist und im unteren Bereich der Streichleiste (15) vorgesehen ist.

4. Einrichtung nach Anspruch 1, dadurch gekennzeichnet, daß die Auslaßmündung (16) im mittleren Längsbereich der Streichleiste (15) angeordnet ist.

5. Einrichtung nach Anspruch 1, dadurch gekennzeichnet, daß die in der Blende (9) vorgesehene Durchtrittsöffnung (10) hinsichtlich ihres Querschnittes veränderbar ist.

6. Einrichtung nach Anspruch 1, dadurch gekennzeichnet, daß die der Blende (9) benachbart liegenden Kanten (26) des Schaufelrades (13) von dieser distanziert sind.

7. Einrichtung nach Anspruch 1, dadurch gekennzeichnet, daß die Achslänge der Trommel (3) nur einen Bruchteil des Durchmessers der Trommel (3) beträgt, beispielsweise 1/4 bis 1/3 .

8. Einrichtung nach Anspruch 1, dadurch gekennzeichnet, daß die Durchtrittsöffnung (10) symmetrisch zu einer durch die Drehachse (14) des Schaufelrades (13) gelegten und gedachten Vertikalebene liegt.

9. Einrichtung nach Anspruch 1, dadurch gekennzeichnet, daß die Durchtrittsöffnung (10) seitlich zu einer durch die Drehachse (14) des Schaufelrades (13) gelegten und gedachten Vertikalebene liegt.

10. Einrichtung nach Anspruch 1, dadurch gekennzeichnet, daß die Drehachse (1) der Trommel (3) und die Drehachse (14) des Schaufelrades (13) in einer gemeinsamen Vertikalebene liegen.

11. Einrichtung nach Anspruch 1, dadurch gekennzeichnet, daß die Drehachse (1) der Trommel (3) und die Drehachse (14) des Schaufelrades (13) bezogen auf eine Vertikalebene gegeneinander versetzt angeordnet sind.

12. Einrichtung nach Anspruch 1, dadurch gekennzeichnet, daß das Schaufelrad (13) zwischen der Blende (9) und einer Stirnwand (7) des luftdichten Gehäuses (4) liegt.

13. Einrichtung nach den Ansprüchen 1 und 11, dadurch gekennzeichnet, daß die Blende (9) austauschbar im Gehäuse (4) angeordnet ist.

14. Einrichtung nach Anspruch 13, dadurch gekennzeichnet, daß in der dem Schaufelrad (13) benachbart liegenden Stirnwand (7) des Gehäuses (4) hori zontal angeordnete Bolzen (8) vorgesehen sind, die sich über das Schaufelrad (13) erstrecken und auf welche die Blende (9) aufgesteckt ist.

15. Einrichtung nach Anspruch 1, dadurch gekennzeichnet, daß die bogenförmig verlaufende Streichleiste (15) innerhalb eines die Trommel (3) axial fortsetzenden, gedachten Zylinders liegt.

16. Einrichtung nach Anspruch 15, dadurch gekennzeichnet, daß die Streichleiste (15) an den an der Stirnwand (7) des Gehäuses (4) vorgesehenen Bolzen (8) lösbar befestigt ist.

17. Einrichtung nach Anspruch 1, dadurch gekennzeichnet, daß die Durchtrittsöffnung (10) vom unteren Rand der Blende (9) ausgeht, einen trapezförmigen Querschnitt mit nach oben konvergierenden Seitenrändern (11) aufweist und die am Rand der Blende (9) gemessene Öffnungsweite der Durchtrittsöffnung (10) höchstens der Sehnenlänge der bogenförmig verlaufenden Streichleiste (15) entspricht, vorzugsweise kleiner als diese ist.

18. Einrichtung nach Anspruch 1, dadurch gekennzeichnet, daß eine Randkante der in der Blende (9) vorgesehenen Durchtrittsöffnung (10) etwa korrespondierend und annähernd deckungsgleich mit einem Bogenabschnitt der Streichleiste (15) verläuft.

19. Einrichtung nach Anspruch 1, dadurch gekennzeichnet, daß der Hüllkreis bzw. der Durchmesser des Schaufelrades (13) kleiner ist als der Durchmesser der Trommel (3).

20. Einrichtung nach Anspruch 19, dadurch gekennzeichnet, daß die Drehachse (14) des Schaufelrades (13) unterhalb der Drehachse (1) der Trommel (3) liegt.

21. Einrichtung nach Anspruch 1, dadurch gekennzeichnet, daß die Druckluftleitung (19) in den das Schaufelrad (13) aufweisenden Teil des Gehäuses (4) mündet und im Bereich der Mündungsöffnung eine Rückschlagklappe (24) vorgesehen ist.

22. Einrichtung nach Anspruch 1, dadurch gekennzeichnet, daß die Blende (9) in ihrem oberen Abschnitt einen von der Umfangskontur der Trommel (3) bzw. des Gehäuses (4) abweichenden Verlauf aufweist und in diesem Bereich mit dem Gehäuse (4) eine Durchtrittsöffnung (25) für die Druckluft begrenzt.

23. Einrichtung nach Anspruch 1, dadurch gekennzeichnet, daß die Schaufeln des Schaufelrades (13) austauschbar befestigt und aus einem elastisch verformbaren Material bestehen.

## Claims

1. A device for conveying mortar for application of a layer of mortar, in particular a layer of concrete, to a passage wall, shuttering or the like, characterised by a drum (3) rotatable about a horizontal axis and connectable at one end to a container (2) for holding the mortar to be processed, and a screen (9), fixed opposite the drum (3) and provided with an opening (10) adjacent to the lower portion of the rotatably mounted drum (3), is associated with the other end of the drum (3), and, viewed in the flow direction of the mortar, a blade wheel (13) is arranged downstream of the screen (9), the rotation axis (14) of the blade wheel (13) lying parallel to the rotation axis (1) of the drum (3), and a curved spreading strip (15), corresponding to the envelope circle of the blade wheel (13) and extending over an angle of approximately 120° to 270°, is arranged laterally of and underneath the opening (10) and is provided with an outlet opening (16) leading to a feed pipe, the width of the opening (10) corresponding at most to the chord length of the curved spreading strip (15) and preferably being smaller than the chord length, and the drum (3) and the blade wheel (13) are arranged in a substantially air-tight housing (4), into which a compressed-air line (19) opens.

2. A device according to claim 1, characterised in that the outlet opening (16) is arranged in the end region of the curved spreading strip (15), and the width of the spreading strip (15), measured in the axial direction of the blade wheel, is as great as the width of the blades of the blade wheel (13).

3. A device according to claim 1, characterised in that the blade wheel (13) comprises blades arranged obliquely to its rotation axis, in that the width of the spreading strip (15) is greater than the width of the oblique blades, the blade wheel is adjacent to the screen (9), and the outlet opening (16) is arranged on the side of the blade wheel (13) remote from the screen (9) and is provided in the lower region of the spreading strip (15).

4. A device according to claim 1, characterised in that the outlet opening (16) is arranged in the central longitudinal region of the spreading strip (15).

5. A device according to claim 1, characterised in that the cross-section of the opening (10) provided in the screen (9) is variable.

6. A device according to claim 1, characterised in that the edges (26) of the blade wheel (13) adjacent to the screen (9) are spaced apart therefrom.

7. A device according to claim 1, characterised in that the axial length of the drum (3) is only a fraction of the diameter of the drum (3), for example 1/4 to 1/3.

8. A device according to claim 1, characterised in that the opening (10) is arranged symmetrically to an imaginary vertical plane extending through the rotation axis (14) of the blade wheel (13).

9. A device according to claim 1, characterised in that the opening (10) is arranged laterally to an imaginary vertical plane extending through the rotation axis (14) of the blade wheel (13).

10. A device according to claim 1, characterised in that the rotation axis (1) of the drum (3) and the rotation axis (14) of the blade wheel (13) lie in a common vertical plane.

11. A device according to claim 1, characterised in that the rotation axis (1) of the drum (3) and the rotation axis (14) of the blade wheel (13) are mutually offset relative to a vertical plane.

12. A device according to claim 1, characterised in that the blade wheel (13) is arranged between the screen (9) and an end wall (7) of the air-tight housing (4).

13. A device according to claims 1 and 11, characterised in that the screen (9) is exchangeably arranged in the housing (4).

14. A device according to claim 13, characterised in that horizontally arranged bolts (8) are provided in the end wall (7) of the housing (4) adjacent to the blade wheel (13) and extend over the blade wheel (13), the screen (9) being mounted on the bolts (8).

15. A device according to claim 1, characterised in that the curved spreading strip (15) is arranged inside an imaginary cylinder axially extending the drum (3).

16. A device according to claim 15, characterised in that the spreading strip (15) is detachably fixed to the bolts (8) provided on the end wall (7) of the housing (4).

17. A device according to claim 1, characterised in that the opening (10) starts from the lower edge of the screen (9), has a trapezoidal cross-section with upwardly converging side edges (11), and the opening width of the opening (10), measured at the edge of the screen (9), corresponds at most to the chord length of the curved spreading strip (15) and is preferably smaller than the chord length.

18. A device according to claim 1, characterised in that a lateral edge of the opening (10) provided in the screen (9) extends in a manner substantially corresponding to and approximately congruent with a curved portion of the spreading strip (15).

19. A device according to claim 1, characterised in that the envelope circle or diameter of the blade wheel (13) is smaller than the diameter of the drum (3).

20. A device according to claim 19, characterised in that the rotation axis (14) of the blade wheel (13) lies below the rotation axis (1) of the drum (3).

21. A device according to claim 1, characterised in that the compressed-air line (19) opens into the part of the housing (4) having the blade wheel (13), and a non-return valve (24) is provided in the region of the inlet opening.

22. A device according to claim 1, characterised in that the upper portion of the screen (9) has a shape deviating from the circumferential contour of the drum (3) or housing (4), and in this region, together with the housing (4), bounds an opening (25) for the compressed air.

23. A device according to claim 1, characterised in that the blades of the blade wheel (13) are exchangeably fixed and comprise an elastically deformable material.

## Revendications

1. Dispositif d'alimentation de mortier, destiné à déposer une couche, en particulier une couche de béton sur une dalle de voirie, dans un coffrage ou organe analogue,
caractérisé en ce que
- un tambour (3) monté tournant autour d'un axe horizontal peut communiquer d'un côté avec un récipient (2) pour en recevoir le mortier à traiter, tandis que de l'autre côté se trouve un écran (9) en position fixe contre le tambour (3) avec, près de la partie inférieure du tambour (3) une ouverture de passage (10),
- derrière l'écran (9) selon la direction d'écoulement du mortier, se trouve une roue à palettes (13) dont l'axe de rotation (14) est parallèle à celui (1) du tambour (3),
- latéralement et en dessous de l'ouverture de passage (10) une poche de balayage (15) en forme d'arc de cercle correspondant à l'enveloppe de la roue à palettes (13) et d'angle au centre de 120 à 270° environ, se raccorde à une embouchure de sortie (16) aboutissant à un tuyau de transfert, la largeur de l'ouverture de passage (10) étant au plus égale et de préférence inférieure à la corde d'arc de la poche (15) de balayage,
- le tambour (3) et la roue à palettes (13) sont montés dans un boîtier (4) essentiellement étanche à l'air, dans lequel débouche une canalisation d'air comprimé (19) .

2. Dispositif selon la revendication 1,
caractérisé en ce que
l'embouchure de sortie (16) se trouve vers une extrémité de la poche de balayage (15) en arc de cercle dont la largeur mesurée selon la direction de l'axe de la roue à palettes (13) est égale à la largeur des palettes.

3. Dispositif selon la revendication 1,
caractérisé en ce que
la roue à palettes (13) porte des palettes inclinées par rapport à l'axe de rotation, la largeur de la poche de balayage (15) est supérieure à celle des palettes obliques, la roue à palettes est proche de l'écran (9) et l'embouchure de sortie (16) se trouve sur le côté de la roue (13) éloigné de l'écran (9) et à la partie inférieure de la poche de balayage (15).

4. Dispositif selon la revendication 1,
caractérisé en ce que
l'embouchure de sortie (16) se trouve dans la zone médiane longitudinalement, de la poche de balayage (15).

5. Dispositif selon la revendication 1,
caractérisé en ce que
l'ouverture de passage (10) prévue dans l'écran (9) a une section variable.

6. Dispositif selon la revendication 1,
caractérisé en ce que
les bords (26) de la roue à palettes (13), situés près de l'écran (9), sont à une certaine distance de celui-ci.

7. Dispositif selon la revendication 1,
caractérisé en ce que
la longueur axiale du tambour (3) est une fraction du diamètre du tambour (3), par exemple 1/4 à 1/3.

8. Dispositif selon la revendication 1,
caractérisé en ce que
l'ouverture de passage (10) est symétrique par rapport à un plan vertical virtuel passant par l'axe de rotation (14) de la roue à palettes (13).

9. Dispositif selon la revendication 1,
caractérisé en ce que
l'ouverture de passage (10) est située latéralement par rapport à un plan vertical virtuel passant par l'axe de rotation (14) de la roue à palettes (13).

10. Dispositif selon la revendication 1,
caractérisé en ce que
l'axe de rotation (1) du tambour (3) et l'axe de rotation (14) de la roue à palettes (13) sont dans un même plan vertical.

11. Dispositif selon la revendication 1,
caractérisé en ce que
l'axe (1) de tambour (3) et l'axe (14) de la roue à palette (13) sont décalés l'un de l'autre verticalement.

12. Dispositif selon la revendication 1,
caractérisé en ce que
la roue à palettes (13) se trouve entre l'écran (9) et une paroi frontale (7) du boîtier (4) étanche à l'air.

13. Dispositif selon les revendications 1 à 11,
caractérisé en ce que
l'écran (9) est disposé dans le boîtier (4) de manière à pouvoir être échangé.

14. Dispositif selon la revendication 13,
caractérisé en ce que
dans la paroi frontale (7) du boîtier (4) située vers la roue à palettes (13) sont prévues des broches horizontales (8) situées au-dessus de la roue (13) et sur lesquelles est emmanché l'écran (9).

15. Dispositif selon la revendication 1,
caractérisé en ce que
la poche de balayage (15) en arc de cercle se trouve à l'intérieur d'un cylindre virtuel prolongeant axialement le tambour (3).

16. Dispositif selon la revendication 15,
caractérisé en ce que
la poche de balayage (15) est montée de manière amovible sur les broches (8) prévues sur la paroi frontale (7) du boîtier (4).

17. Dispositif selon la revendication 1,
caractérisé en ce que
l'ouverture de passage (10) part du bord inférieur de l'écran (9), présente une section en forme de trapèze dont les bords latéraux (11) convergent vers le haut, et la largeur de l'ouverture de passage (10), mesurée au bord de l'écran (9) est au plus égale et de préférence inférieure à la longueur de la corde d'arc de la poche de balayage (15) en forme d'arc de cercle.

18. Dispositif selon la revendication 1,
caractérisé en ce que
un bord de l'ouverture de passage (10) prévue dans l'écran (9) correspond sensiblement en la recouvrant à peu près, à une partie de l'arc de la poche de balayage (15).

19. Dispositif selon la revendication 1,
caractérisé en ce que
l'enveloppe, c'est-à-dire le diamètre, de la roue à palettes (13) est inférieure au diamètre du tambour (3).

20. Dispositif selon la revendication 19,
caractérisé en ce que
l'axe de rotation (14) de la roue à palettes (13) est en dessous de l'axe de rotation (1) du tambour (3).

21. Dispositif selon la revendication 1,
caractérisé en ce que
la canalisation d'air comprimé (19) débouche dans la partie du boîtier (4) contenant la roue à palettes (13) et porte, vers son embouchure, un clapet antiretour (24).

22. Dispositif selon la revendication 1,
caractérisé en ce que
l'écran (9), dans sa partie supérieure, a son bord qui s'écarte du contour périphérique du tambour (3) ou du boîtier (4) pour délimiter, dans cette zone, avec le boîtier (4) une ouverture de passage (25) pour l'air comprimé.

23. Dispositif selon la revendication 1,
caractérisé en ce que
les palettes de la roue (13) sont montées de manière à pouvoir jtre échangées, et sont faites d'un matériau déformable élastiquement.
